# EUROPEAN PATENT APPLICATION

(11) **EP 2 878 768 A1**
(43) Date of publication of application: **03.06.2015**
(21) Application number: 14194492.6
(22) Date of filing: 24.11.2014
(51) Int. Cl.: F01D 5/18

(54) **Blade with peaked diamond-shaped turbulators, corresponding turbulator and gas turbine engine**

(30) Priority: 02.12.2013 US 201314093564
(71) Applicant: Siemens Energy, Inc., Orlando, FL 32826-2399 (US)
(72) Inventor: Liang, George, Palm City, FL 34990 (US)
(74) Representative: Maier, Daniel Oliver

(57) **Abstract**

A turbulator having a diamond-shaped configuration where a front portion of the turbulator is a mirror image of a rear portion of the turbulator, and where the turbulator has application for cooling flow channels in a blade of a gas turbine engine. An array of the diamond-shaped turbulators is positioned in rows relative to the flow of the cooling air so that a turbulator in one of the rows is positioned relative to the gap between two turbulators in an adjacent row to break up the flow of air flowing between the turbulators.

## Description

### BACKGROUND OF THE INVENTION

### Field of the Invention

This invention relates generally to a turbulator that provides a turbulent airflow within cooling channels in a blade of a gas turbine engine and, more particularly, to a turbulator that provides a turbulent airflow within cooling channels in a blade of a gas turbine engine, where the turbulator has a diamond-shaped configuration.

### Discussion of the Related Art

The world's energy needs continue to rise which provides a demand for reliable, affordable, efficient and environmentally-compatible power generation. A gas turbine engine is one known machine that provides efficient power, and often has application for an electric generator in a power plant, or engines in an aircraft or a ship. A typically gas turbine engine includes a compressor section, a combustion section and a turbine section. The compressor section provides a compressed air flow to the combustion section where the air is mixed with a fuel, such as natural gas, and ignited to create a hot working gas. The working gas expands through the turbine section and is directed across rows of blades therein by associated vanes. As the working gas passes through the turbine section, it causes the blades to rotate, which in turn causes a shaft to rotate, thereby providing mechanical work.

The temperature of the working gas is tightly controlled so that it does not exceed some predetermined temperature for a particular turbine engine design because to high of a temperature can damage various parts and components in the turbine section of the engine. However, it is desirable to allow the temperature of the working gas to be as high as possible because the higher the temperature of the working gas, the faster the flow of the gas, which results in a more efficient operation of the engine.

In certain gas engine turbine designs, a portion of the compressed air flow is also used to provide cooling for certain components in the turbine section, typically the vanes, blades and ring segments. The more cooling and/or the more efficient cooling that can be provided to these components allows the components to be maintained at a lower temperature, and thus the higher the temperature of the working gas can be. For example, by reducing the temperature of the compressed gas, less compressed gas is required to maintain the part at the desired temperature, resulting in a higher working gas temperature and a greater power and efficiency from the engine. Further, by using less cooling air at one location in the turbine section, more cooling air can be used at another location in the turbine section. In one known turbine engine design, 80% of the compressed air flow is mixed with the fuel to provide the working gas and 20% of the compressed air flow is used to cool the turbine section parts. If less of that cooling air is used at one particular location as a result of the cooling air being lower in temperature, then more cooling air can be used at other areas in the turbine section for increased cooling.

It is known in the art to provide a serpentine cooling airflow channel within the blades in the turbine section, where the air flows up one channel and down an adjacent channel in a back and forth motion before the cooling air exits the blade. In one known cooling air flow channel design, a series of specially configured turbulators or trip strips are positioned within the flow channels that cause the airflow over the trip strips to become turbulent. The disturbance in the air flow provided by the trip strip augments the local heat transfer coefficient of the air and thus enhances the cooling performance. Improvements can be made to the trip strips to further enhance the cooling performance.

### SUMMARY OF THE INVENTION

This disclosure describes a turbulator having a diamond-shaped configuration where a front portion of the turbulator is a mirror image of a rear portion of the turbulator, and where the turbulator has application for cooling flow channels in a blade of a gas turbine engine. An array of the diamond-shaped turbulators is positioned in rows relative to the flow of the cooling air so that a turbulator in one of the rows is positioned relative to the gap between two turbulators in an adjacent row to break up the flow of air flowing between the turbulators.

Additional features of the present invention will become apparent from the following description and appended claims, taken in conjunction with the accompanying drawings.

### BRIEF DESCRIPTION OF THE DRAWINGS

Figure 1 is a cut-away, isometric view of a gas turbine engine;
Figure 2 is a cross-sectional view of one blade separated from the row of the blades in the gas turbine engine and showing air cooling flow channels therein;
Figure 3 is a cross-sectional view along line 3-3 of the blade shown in figure 2;
Figure 4 is an illustration showing a number of known skewed trip strips within the flow channels in the blade shown in figures 2 and 3;
Figure 5 is a cross-sectional view of one of the trip strips shown in figure 4;
Figure 6 is an illustration showing a series of known Chevron-type trip strips within the flow channels in the blade shown in figures 2 and 3;
Figure 7 is an illustration of known segmented and skewed trip strips within the flow channels in the blade shown in figures 2 and 3;
Figure 8 is an illustration showing a configuration of diamond-shaped turbulators within the flow channels in the blade shown in figures 2 and 3;
Figure 9 is a side view of one of the turbulators shown in figure 8; and
Figure 10 is a top view of two adjacent turbulators shown in figure 8.

### DETAILED DESCRIPTION OF THE EMBODIMENTS

The following discussion of the embodiments of the invention directed to a diamond-shaped turbulator for cooling flow channels within a gas turbine engine blade is merely exemplary in nature, and is in no way intended to limit the invention or its applications or uses.

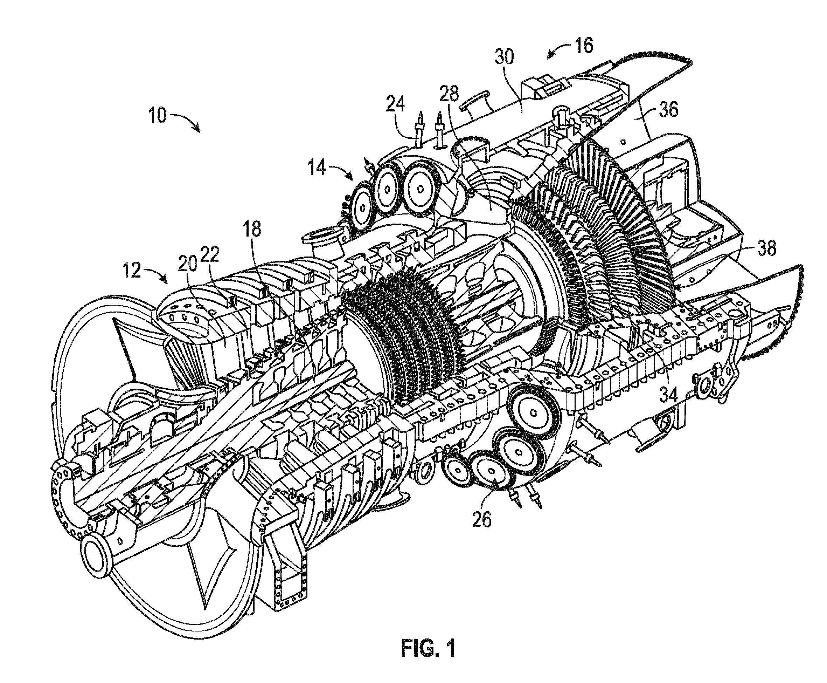

Figure 1 is a cut-away, isometric view of a gas turbine engine 10 including a compressor section 12, a combustion section 14 and a turbine section 16 all enclosed within an outer housing or casing 30, where operation of the engine 10 causes a central shaft or rotor 18 to rotate, thus creating mechanical work. The engine 10 is illustrated and described by way of a non-limiting example to give context to the invention discussed below. Those skilled in the art will appreciate that other gas turbine engine designs will also benefit from the invention. Rotation of the rotor 18 draws air into the compressor section 12 where it is directed by vanes 22 and compressed by rotating blades 20 to be delivered to the combustion section 14 where the compressed air is mixed with a fuel, such as natural gas, and where the fuel/air mixture is ignited to create a hot working gas. More specifically, the combustion section 14 includes a number of circumferentially disposed combustors 26 each receiving the fuel in the combustor 26 by an injector (not shown) and mixed with the compressed air to be ignited by an igniter 24 to create the working gas, which is directed by a transition 28 into the turbine section 16. The working gas is directed by circumferentially disposed stationary vanes (not shown) in the turbine section 16 to flow across circumferentially disposed rotatable turbine blades 34, which causes the turbine blades 34 to rotate, thus rotating the rotor 18. Once the working gas passes through the turbine section 16 it is output from the engine 10 as an exhaust gas through an output nozzle 36.

Each group of the circumferentially disposed stationary vanes defines a row of the vanes and each group of the circumferentially disposed blades 34 defines a row 38 of the blades 34. In this non-limiting embodiment, the turbine section 16 includes four rows 38 of the rotating blades 34 and four rows of the stationary vanes in an alternating sequence. In other gas turbine engine designs, the turbine section 16 may include more or less rows of the turbine blades 34. It is noted that the most forward row of the turbine blades 34, referred to as the row 1 blades, and the vanes, referred to as the row 1 vanes, receive the highest temperature of the working gas, where the temperature of the working gas decreases as it flows through the turbine section 16.

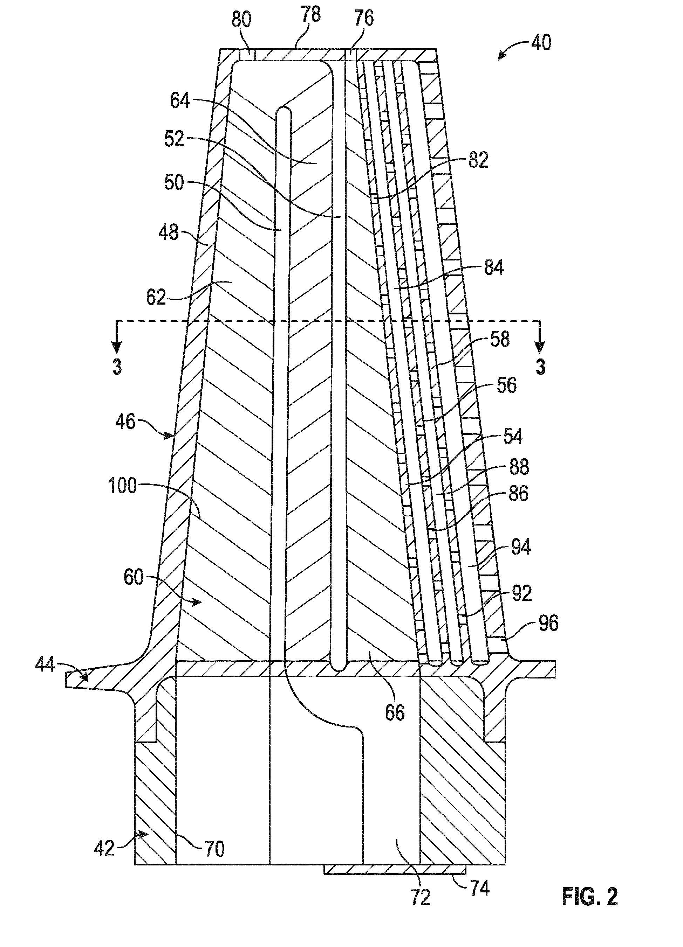

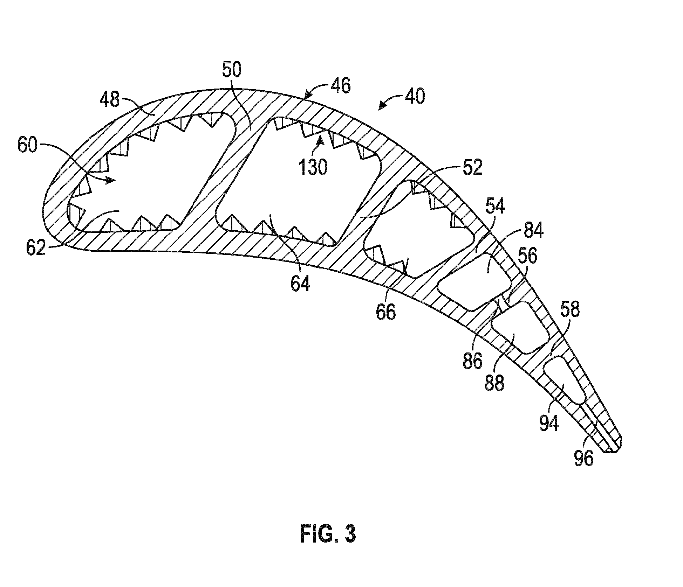

Figure 2 is a cross-sectional view of an airfoil or blade 40 that is intended to represent a row 2 blade, but can be a general representation of any of the blades 34 in the rows in the gas turbine engine 10, where the blade 40 includes cooling fluid flow channels discussed in detail below. Figure 3 is a cross-sectional view of the blade 40 along line 3-3 in figure 2. The blade 40 includes an attachment portion 42 that is configured to allow the blade 40 to be securely mounted to the rotor 18 in a manner well understood by those skilled in the art. A blade platform 44 is provided at a distal end of the attachment portion 42 and defines the beginning of a tapered airfoil portion 46 of the blade 40.

The airfoil portion 46 includes an outer housing 48 and a number of internal ribs 50, 52, 54, 56 and 58 that define a serpentine flow channel 60 including a channel portion 62 between the outer housing 48 and the rib 50, a channel portion 64 between the ribs 50 and 52 and a channel portion 66 between the ribs 52 and 54. Air flows into the blade 40 through an input opening 70 in the attachment portion 42, enters the channel portion 62 and flows towards an end portion 78 of the housing 48, where some of the airflow exits the flow channel portion 62 through orifices 80 in the end portion. The air then flows back down the blade 40 through the channel portion 64 into a chamber 72 in the attachment portion 42 that has an opening covered by a cover plate 74. The air then flows back up the blade 40 through the channel portion 66 and through orifices 76 in the end portion 78 of the blade 40. The rib 54 includes an array of orifices 82 that allow some of the air to flow into an impingement channel 84 between the ribs 54 and 56, the rib 56 includes an array of orifices 86 that allow the air to flow into a channel 88 between the ribs 56 and 58, and the rib 58 includes an array of orifices 92 that allow the air to flow into an impingement channel 94 between the rib 58 and the outer housing 48. An array of orifices 96 in the outer housing 48 allows the air to flow out of the blade 40. As is apparent, the orifices 82, 86 and 92 in the ribs 54, 56 and 58 are staggered relative to each other so that the air does not flow directly from one channel across the next channel into the following channel. This causes the air flowing through one of the orifices to strike a section of the rib in the next channel creating turbulence that increases the cooling effect. Particularly, this airflow effect creates vortices inside of the channels 84, 88 and 94 that provides turbulence for effective cooling.

It is known in the art to provide a configuration of turbulators or trip strips mounted to the inner walls of the channel portions 62, 64 and 66, represented generally as reference number 100 in figure 2. It is noted that the discussion below will first describe known trip strips followed by a discussion of a new configuration of trip strips according to the invention, where the reference number 100 is intended to represent all in figure 2. As is known in the art, a trip strip for this purpose is a metal strip formed to an inside surface of the outer housing 48 of the blade 40 in a transverse direction to the flow of the cooling air. In this design, the trip strips 100 are shown as skewed trip strips in that they are angled slightly relative to the direction of the flow of the cooling air. In an alternate embodiment, the trip strips 100 can be normal to the flow direction of the air. Skewed trip strips are sometimes employed over normal trip strips so as to allow the trip strip to be longer, which provides more turbulent airflow.

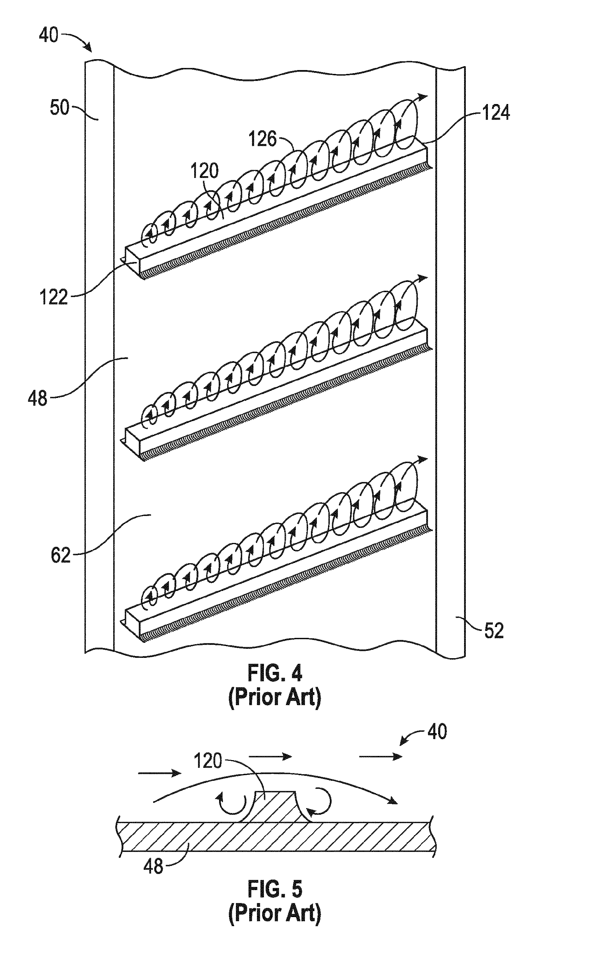

Figure 4 is an illustration of a portion of the blade 40 showing part of the channel portion 62. This illustration shows three known skewed trip strips 120 each including a leading edge 122 and a trailing edge 124. Figure 5 is a cross-sectional view of one of the trip strips 120. As the air flows across the trip strip 120 in an upward direction in figure 4, the trip strip 120 trips the thermal boundary layer of the cooling air and causes it to generate an air vortex 126 along the length of the trip strip 120 from the leading edge 122 to the trailing edge 124. The air flow over and around the trip strip 120 is represented by the arrows in figure 5. The configuration and orientation of the trip strips 120 causes the helical formation of the air vortex 126 to increase in size from the leading edge 122 to the trailing edge 124, i.e., increase in diameter. As the size of the vortex 126 increases the air becomes less turbulent, which reduces its effectiveness for cooling. Particularly, as the vortex 126 propagates along the full length of the trip strip 120, the boundary layer becomes progressively more disturbed or thickened, and consequently the tripping effect of the boundary layer becomes progressively less effective. The net result of this boundary layer growth is a significantly reduced heat transfer augmentation. More specifically, as the airflow hits the leading edge 122 of the trip strip 120 and the vortex 126 is created, by the time the boundary layer for that part of the airflow reaches the trailing edge 124 of the trip strip 120, the vortex 126 is already present on the trip strip 120, where the combination of the airflow in those directions increases the size of the vortex 126, which reduces the ability of the trip strip 120 to trip the airflow.

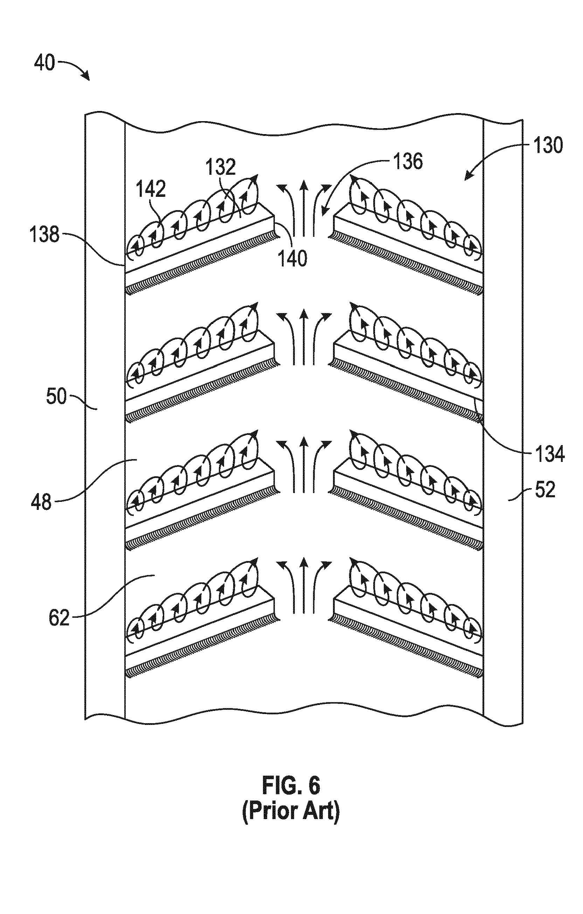

Figure 6 is an illustration of a portion of the blade 40 showing a portion of the channel portion 62 similar to the illustration shown in figure 4, where the cooling flow is in an upward direction. This illustration shows a series of known Chevron-type trip strips 130 each including opposing and skewed trip strip sections 132 and 134 defining a gap 136 therebetween that are oriented in opposite directions, as shown, where each of the trip strip sections 132 and 134 includes a leading edge 138 and a trailing edge 140. As above, each trip strip section 132 and 134 generates an air vortex 142 that travels from the leading edge 138 to the trailing edge 140. Airflow between the sections 132 and 134 through the gap 136 interacts with the vortices 142, which creates two thick boundary layers at the junction of the trailing edges 140 of the two trip strip sections 132 and 134, which reduces the cooling effectiveness.

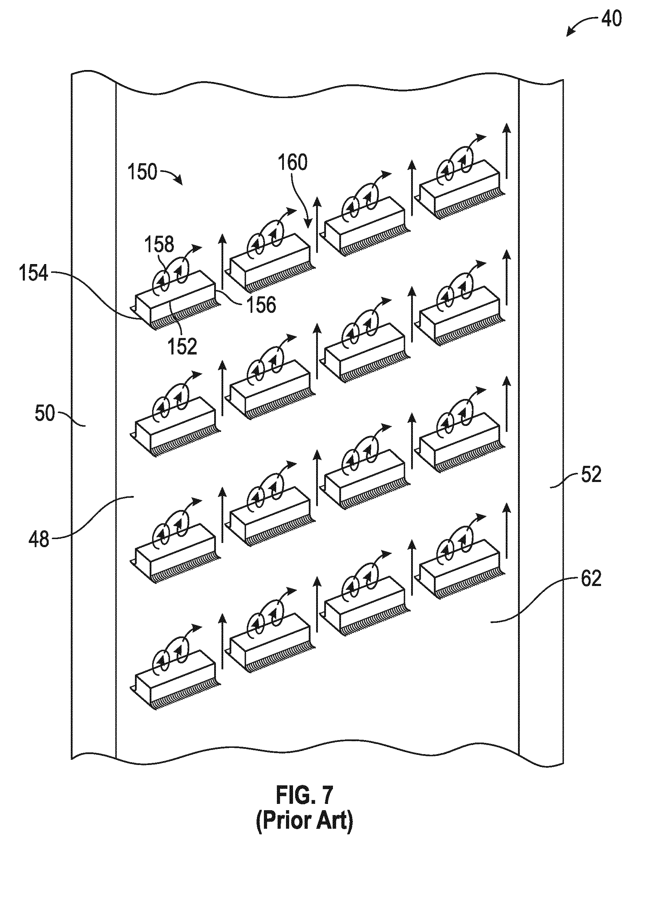

The interaction of the vortices 142 can be eliminated by segmenting a skewed Chevron-type trip strip 150 into a series of sections 152, each including a leading edge 154 and a trailing edge 156, and each generating an air vortex 158, as shown in figure 7, which provides multiple gaps 160 therebetween for cooling air to flow through. Regardless of either of these Chevron configurations, the thick boundary layer built-up by the vortices still reduces the tripping effect by the incoming cooling flow and thus reduces the heat transfer augmentation along the trip strip.

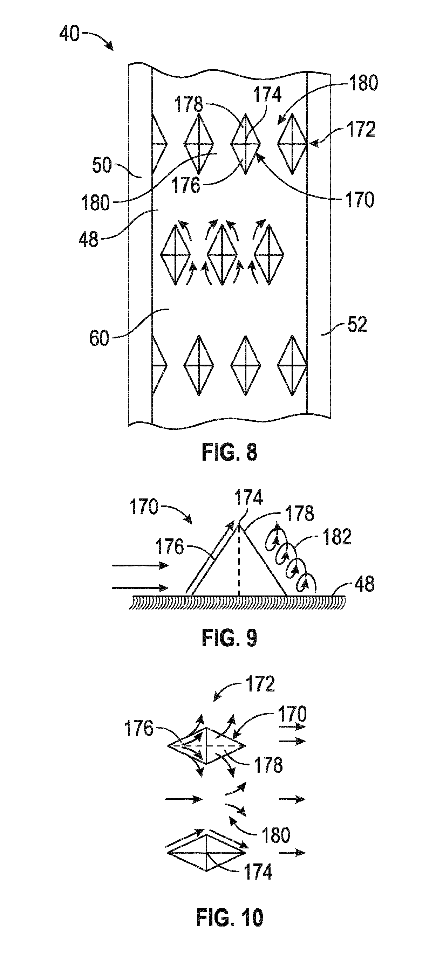

The present invention proposes a new configuration for the trip strip 100 that eliminates the thick boundary layer caused by the build-up of the air vortices. Figure 8 is an illustration of a portion of the blade 40 showing a portion of the channel portion 62 similar to the illustrations shown in figures 4, 6 and 7, where the cooling flow is in an upward direction. In this new design, the trip strip 100 is configured as diamond-shaped turbulators 170, where each turbulator 170 has a pointed peak 174, a leading edge 176 and a trailing edge 178. The diamond-shape of the turbulators 170 provides a front side and a back side of the turbulators 170 that are mirror images of each other.

Figure 9 shows a side view of one of the turbulators 170 and figure 10 shows a top view of two adjacent turbulators 170 both showing the airflow around the turbulators 170, where arrows depict the flow of air over and around the turbulators 170. The turbulators 170 are arranged or configured in rows 172, where the turbulators 170 are spaced apart to create gaps 180 therebetween. The rows 172 of the turbulators 170 are configured so a turbulator 170 in one of the rows 172 is positioned relative to the gap 180 between two adjacent turbulators 170 in an adjacent row 172, as shown. Therefore, airflow between two of the turbulators 170 in one row 172 interacts with a turbulator 170 in the next row downstream therefrom. The turbulators 170 are constructed with an increase in height and width along the length of the turbulator 170 from the leading edge 176 of the turbulator 170 to the mid-point of the turbulator 170.

In operation, the cooling flow is tripped by the front portion or leading edge 176 of the turbulator 170, which creates a "ski-jump" upward where the airflow spreads outward and rolls along the length of the turbulator 170. As the newly formed upper flow over the turbulator 170 continues, the tripped cooling flow will reattach to the channel wall, thus creating a very high heat transfer coefficient at the location of the re-attachment. A backward counter air vortex 182 is created on the back portion of the turbulator 170, which further enhances the turbulence level and prolongs the high heat transfer coefficient along the channel wall. The turbulators 170 eliminate the interaction of the air vortices between old vortices and newly formed vortices by the incoming cooling flow along the turbulator 170, thus creating a much more effective way of tripping the boundary layer and inducing a much higher heat transfer augmentation. Furthermore, for the end line arrangement of the turbulators 170, the converging and diverging gaps 180 between two discrete diamond-shaped turbulators 170 allows the cooling flow channel through the opening, generating a new boundary layer. With this newly formed boundary layer created by the diverging opening, a shearing-off effect of the air vortices generated by the turbulator 170 occurs.

The foregoing discussion discloses and describes merely exemplary embodiments of the present invention. One skilled in the art will readily recognize from such discussion, and from the accompanying drawings and claims, that various changes, modifications and variations can be made therein without departing from the scope of the invention as defined in the following claims.

## Claims

1. A blade for a gas turbine engine, said blade comprising:
an outer housing wall defining an enclosure;
a plurality of ribs extending at least a portion of a length of the blade within the enclosure and defining at least one flow channel that allows a cooling airflow to flow from a proximal end to a distal end of the enclosure; and
a plurality of spaced apart diamond-shaped turbulators each having a peak and being formed to an inside surface of the outer housing wall and extending into the flow channel, said plurality of diamond-shape turbulators being formed in an array of rows where a turbulator in one row is positioned relative to a gap between adjacent turbulators in an adjacent row.

2. The blade according to claim 1 wherein a front portion of each turbulator is a mirror image of a back portion of each turbulator.

3. The blade according to claim 1 wherein each turbulator includes a pointed peak.

4. The blade according to claim 1 wherein the blade is part of a second row of blades in a turbine section of the gas turbine engine.

5. The blade according to claim 1 wherein each turbulator is formed from a metal.

6. The blade according to claim 1 wherein the at least one flow channel is a serpentine flow channel.

7. A diamond-shaped turbulator for creating a turbulated airflow in a cooling flow channel, said turbulator having a diamond-shape defining a pointed peak where a front portion of the turbulator and a back portion of the turbulator are mirror images of each other.

8. The turbulator according to claim 7 wherein the turbulator is part of an array of turbulators arranged in rows in the cooling channel where a turbulator in one row is positioned relative to a gap between adjacent turbulators in an adjacent row.

9. The turbulator according to claim 7 wherein the cooling fluid flow channel is provided within a blade for a gas turbine engine.

10. The turbulator according to claim 9 wherein the blade is part of a second row of blades in a turbine section of the gas turbine engine.

11. The turbulator according to claim 9 wherein the cooling fluid flow channel is a serpentine flow channel.

12. The turbulator according to claim 7 wherein the turbulator is formed from a metal.

13. A gas turbine engine comprising:
an outer housing;
a compressor section being operable to produce a compressed air flow;
a combustion section in fluid communication with the compressor section that receives a combustion portion of the compressed air flow, said combustion section mixing the combustion portion of the compressed air flow with a fuel and combusting the mixture to produce a hot working gas; and
a turbine section in fluid communication with the combustion section, said turbine section receiving the hot working gas, said turbine section including a plurality of rows of vanes and a plurality of rows of blades, wherein at least some of the blades include an outer housing wall defining an enclosure, a plurality of ribs extending at least a portion of a length of the blade within the enclosure and defining at least one flow channel that allows a cooling airflow to flow from a proximal end to a distal end of the enclosure, and a plurality of spaced apart diamond-shaped turbulators each having a peak and being formed to an inside surface of the outer housing wall and extending into the flow channel, said plurality of diamond-shape turbulators being formed in an array of rows where a turbulator in one row is positioned relative to a gap between adjacent turbulators in an adjacent row.

14. The gas turbine engine according to claim 13 wherein a front portion of each turbulator is a mirror image of a back portion of each turbulator.

15. The gas turbine engine according to claim 13 wherein each turbulator includes a pointed peak.

16. The gas turbine engine according to claim 13 wherein the at least some of the blades are part of a second row of blades in the turbine section.

17. The gas turbine engine according to claim 13 wherein each turbulator is formed from a metal.

18. The gas turbine engine according to claim 13 wherein the at least one flow channel is a serpentine flow channel.
